# EUROPÄISCHE PATENTSCHRIFT

(11) **EP 1 328 838 B1**
(45) Veröffentlichungstag und Bekanntmachung des Hinweises auf die Patenterteilung: **02.08.2006**
(21) Anmeldenummer: 01987894.1
(22) Anmeldetag: 08.10.2001
(51) Int. Cl.: G02B 26/08, G02B 7/18, G02B 7/185, G02B 7/188

(54) **ADAPTIVER SPIEGEL MIT KÜHLKANÄLEN**
ADAPTIVE MIRROR COMPRISING COOLING CHANNELS
MIROIR ADAPTATIF A CANAUX DE REFROIDISSEMENT

(30) Priorität: 21.10.2000 DE 10052250
(43) Veröffentlichungstag der Anmeldung: 23.07.2003
(73) Patentinhaber: LT Ultra-Precision-Technology GmbH, 88634 Aftholderberg (DE)
(72) Erfinder: BISCHOF, Dietmar, 88697 Bermatingen (DE)
(74) Vertreter: Weiss, Peter
(86) Internationale Anmeldenummer: PCT/EP2001/011598
(87) Internationale Veröffentlichungsnummer: WO 2002/033471

(56) Entgegenhaltungen:
- EP-A- 0 710 551
- EP-A- 1 118 897
- DE-A- 4 137 832
- DE-A- 19 832 343
- US-A- 4 264 146
- US-A- 4 314 742
- US-A- 4 492 431
- US-A- 4 934 803
- ANTHONY F M: "HIGH HEAT LOAD OPTICS: AN HISTORICAL OVERVIEW" OPTICAL ENGINEERING, SOC. OF PHOTO-OPTICAL INSTRUMENTATION ENGINEERS. BELLINGHAM, US, Bd. 34, Nr. 2, 1. Februar 1995 (1995-02-01), Seiten 313-320, XP000490719 ISSN: 0091-3286

## Beschreibung

Die Erfindung betrifft einen adaptiven Spiegel als Laser-Strahlführungskomponente mit einem Gehäuse, welchem ein Spiegelelement zugeordnet ist, wobei das Spiegelelement verformbar und zumindest eine ovale Membran des Spiegelelementes ein- oder mehrteilig ausgebildet ist.

Derartige adaptive Spiegel sind in vielfältigster Form und Ausführung im Markt bekannt und erhältlich. Sie dienen im wesentlichen als Laser-Strahlführungskomponente zur Umlenkung von Laserlicht. Dabei sind im Markt runde Spiegel bekannt, die auch ebenfalls deformierbar ausgebildet sein können, um eine Justierung des Laserstrahles vorzunehmen.

Nachteilig daran ist, dass eine exakte Justierung unterschiedlicher Wellenfronten sowie Divergenzen zwischen einfallendem und reflektierendem Laserlicht durch eine Wölbung von runden Spiegeln nur unzureichend erfolgt.

Wird ein runder Spiegel verformt, so wird seine Spiegeloberfläche abschniccartig nach aussen oder nach innen gewölbt.

Hierdurch lassen sich Unterschiede in der Wellenfront nicht exakt justieren bzw. Divergenzen ausgleichen. Dies führt insbesondere zu Veränderungen des Brennpunktes sowie zu unerwünschten Veränderungen des Laserstrahles, insbesondere seiner Wellenfront.

Die DE 198 32 343 offenbart einen adaptiven Spiegel, welcher in einem Gehäuse schwimmend gelagert ist. Dieser ist durch rückseitige Druckbeaufschlagung in unterschiedlichen Biegelinie, je nach ein-, zwei- oder dreiwärtiger Lagerung verbiegbar.

Die DE 41 37 832 A1 zeigt einen ähnlichen adaptiven schwimmend gelagerten Spiegel, der durch Druckbeaufschlagung verbiegbar ist. Dabei können je nach Lagerung unterschiedliche Biegelinien erzeugt werden.

Die EP 0 710 551 A1 offenbart einen mittels eines Piezoaktuators verformbaren Spiegels. Dort siLzL der Piezoaktuator unmittelbar mittig unterhalb einer gekühlten Membran und beaufschlagt diese zur Deformation mit Druck.

Die US 4,492,431 sowie die US 4,934,803 beschreiben jeweils verformbare Spiegel, bei welchen über eine Mehrzahl von über die Oberfläche verteilte Aktuatoren eine Oberflächenverformung eingestellt wird.

Die US 4,314,742 beschreibt einen Spiegel mit einer zweiteiligen Membran, welche eine Anordnung von spiralförmigen Kühlkanälen eines starren nicht verformbaren Spiegelelementes aufweist.

Die Veröffentlichung aus Optical Engineering, Band 34, Nr. 2, Seiten 313 bis 320 von F.M. Anthony, "High head load optics: an historical overview", 01. Februar 1995, XPOOD,190719, ISSN: 0091-3286, offenbart eine Vielzahl von unterschiedlich ausgebildeten Kühlkanälen von herkömmlichen statischen Spiegeln.

Der vorliegenden Erfindung liegt die Aufgabe zugrunde, einen Spiegel, insbesondere einen adaptiven Spiegel der eingangs genannten Art zu schaffen, welcher die genannten Nachteile beseitigt und mit welchem auf einfache und effektive Weise Divergenzen zwischen ein- und ausfallendem Lasserlicht auf eine Spiegeloberfläche, insbesondere auf ein Spiegelelement justiert werden können, wobei auch Einfluss auf die entsprechenden Wellenfronten genommen werden soll.

Zur Lösung dieser Aufgabe führt, dass das Spiegelelement nach Anspruch 1 oval, insbesondere elliptisch ausgebildet ist und eine Breite und/oder eine Gesamtlänge des Spiegelelementes in Abhängigkeit von einem Einfallswinkel von Laserlicht auf eine Oberfläche des Spiegelelementes wählbar ist, wobei bei einem festgelegten, beliebigen Einfallswinkel sich ein Verhältnis von Gesamtlänge und Breite sich nach (G = B/(cos²γ)) einstellt, und die zumindest eine Membran zweiteilig ausgebildet ist, wobei der Membran des Spiegelelementes eine Mehrzahl von Kühlkanälen zugeordnet ist und eine erste Anordnung von Kühlkanälen parallel und beabstandet zueinander verläuft, wobei eine zweite Anordnung von Kühlkanälen hierzu, vorzugsweise rechtwinklig und parallel beabstandet verläuft, so dass dazwischen jeweils karo- oder rautenartige Stegelemente gebildet sind, wobei die einen Kühlkanäle einen Winkel α zu einer Querachse des Spiegelelementes von etwa 30° bis 60°, insbesondere von 45° einschliessen und dass die rechtwinklig dazu verlaufenden zweiten Kühlkanäle einen Winkel β von etwa -30° bis -60°, insbesondere von -45° zur Querachse des Spiegelelementes (4) einschliessen.

Bei der vorliegenden Erfindung ist von Bedeutung, dass der Spiegel, insbesondere seine Membran oval ausgebildet ist. Hierbei ist das Spiegelelement von einer Gesamtlänge und einer Breite, die differieren. Die Gesamtlänge und die Breite des Spiegelelementes stehen in einem Verhältnis zum winkel des ein- und/oder ausfallenden Laserlicht, bezogen auf eine Mittelachse, die lotrecht zur Obefläche steht und/oder bezogen auf eine Querachse des Spiegelelementes.

Insbesondere durch die ovale Form des Spiegelelementes ist diese bei einer entsprechenden Deformierung als regelbare adaptive Optik, insbesondere um den Bereich der Querachse und Längsachse gewölbt.

Im Gegensatz zu runden Spiegeln erfolgt eine Wölbung nicht kugelabschnittartig bzw. halbschalenartig, sondern in etwa im Bereich der Mittelachse homogen um die Querachse und Längsachse unterschiedlich. Durch unterschiedliche Längen von Querachse und Längsachse ergeben sich unterschiedliche Radien.

Genau dieser Effekt bewirkt, dass sich Divergenzen bei winklig einfallendem Laserlicht auf die Oberfläche des Spiegelelementes justieren lassen.

Da der Ein- oder Aufallwinkel eines derartigen Spiegels, insbesondere einer derartigen Laser-Strahlführungskomponente eine festgelegte Grösse ist, lässt sich aufgrund dieser Grösse der Spiegel entsprechend seiner Gesamtlänge bzw. -breite im Verhältnis Gesamtlänge ist gleich Breite dividiert durch Kosinus Quadrat von Einfalls- und/oder Ausfallswinkel einstellen.

Hierdurch können ganz bestimmte Einfalls- und/oder Ausfallswinkel, beispielsweise 45°, 30°, 15° zu einer lotrechten Mittelachse zur Spiegeloberfläche die Breite bzw. Gesamtlänge des Spiegelelementes bestimmt und definiert werden. Enstprechend diesen Winkeln wird dann die ovale oder elliptische Form des Spiegelelementes hergestellt bzw. angepasst. Hierdurch wird ein Spiegelelement geschaffen, mit welchem sich auf einfache Weise Divergenzen und Wellenfronten beeinflussen lassen, wenn das Spiegelelement als adaptive Optik, insbesondere als deformierbarer Spiegel ausgebildet ist. Hierzu kann das Spiegelelement aus einer einzelnen oder aus einer Mehrzahl von einzelnen Membranen gebildet sein, die ggf. direkt über Kühlkanäle gekühlt werden können. Die Kühlung kann jedoch auch hier anders erfolgen. Im bevorzugten Ausführungsbeispiel jedoch sind im Bereich der Spiegeloberlfäche, insbesondere im Bereich der Membran Kühlkanäle vorgesehen, um die Oberfläche direkt und permanent unabhängig und entkoppelt von einem Aktuator zur Deformierung des Spiegelelementes permanent zu kühlen.

Hierdurch wird ein Spiegelelement geschaffen, welches sich mittels unterschiedlichen Aktuatoren adaptiv einstellen lässt, wobei durch insbesondere seine ovale Form sich Divergenzen und Wellenfronten sich verändern bzw. justieren lassen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht auf einen deformierbaren Spiegel, insbesondere auf einen adaptiven Spiegel;
Figur 2 einen Längsschnitt durch den deformierbaren Spiegel im Bereich einer Membran, insbesondere im Bereich von Kühlkanälen entlang Linie II-II gemäss Figur 1;
Figur 3 einen schematisch dargestellten Querschnitt durch den deformierbaren Spiegel gemäss Figur 1 entlang Linie III-III;
Figur 4 einen Querschnitt durch den Spiegel gemäss Figur 1 als weiteres Ausführungsbeispiel;
Figur 5 eine schematisch dargestellte Draufsicht auf einen erfindungsgemässen Spiegel, insbesondere deformierbaren Spiegel;
Figur 6 eine schematisch dargestellte Seitenansicht auf den Spiegel gemäss Figur 5 mit gestrichelt angedeuteten einzelnen Laserstrahlen.

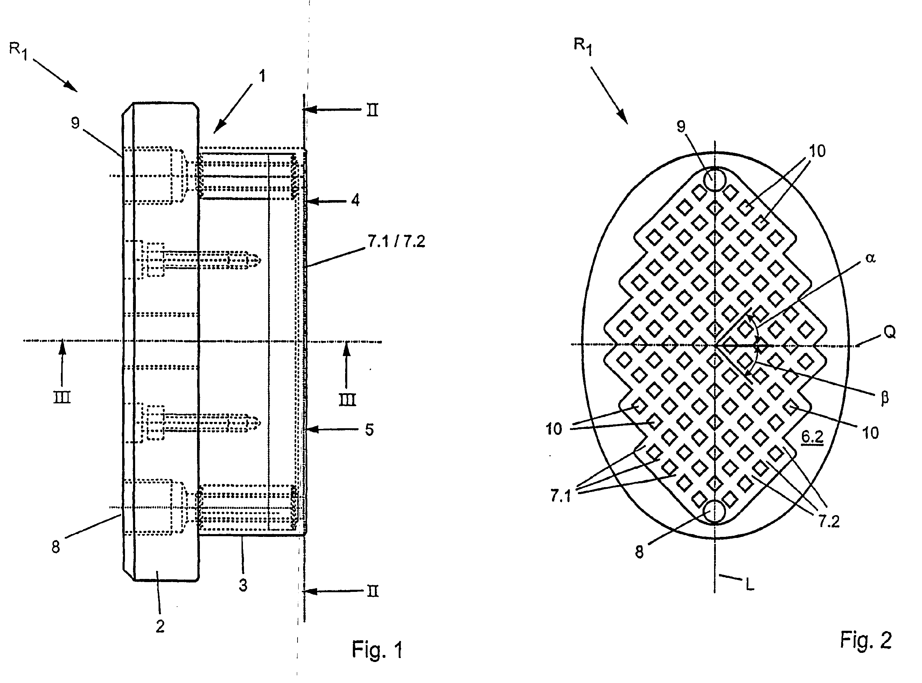

Gemäss Figur 1 weist ein deformierbarer Spiegel R₁ ein Gehäuse 1 auf, welches aus einer Grundplatte 2, daran anschliessenden Zylinderwand 3 und stirnseitig abschliessendem Spiegelelement 4 gebildet ist. Das Spiegelelement 4 besitzt eine polierte Oberfläche 5 zum Umlenken von einfallendem Laserlicht.

Insbesondere zum Beeinflussen des Laserlichtes, welches auf die Oberfläche 5 auftrifft, ist das Spiegelelement 4 deformierbar, insbesondere adaptiv ausgebildet.

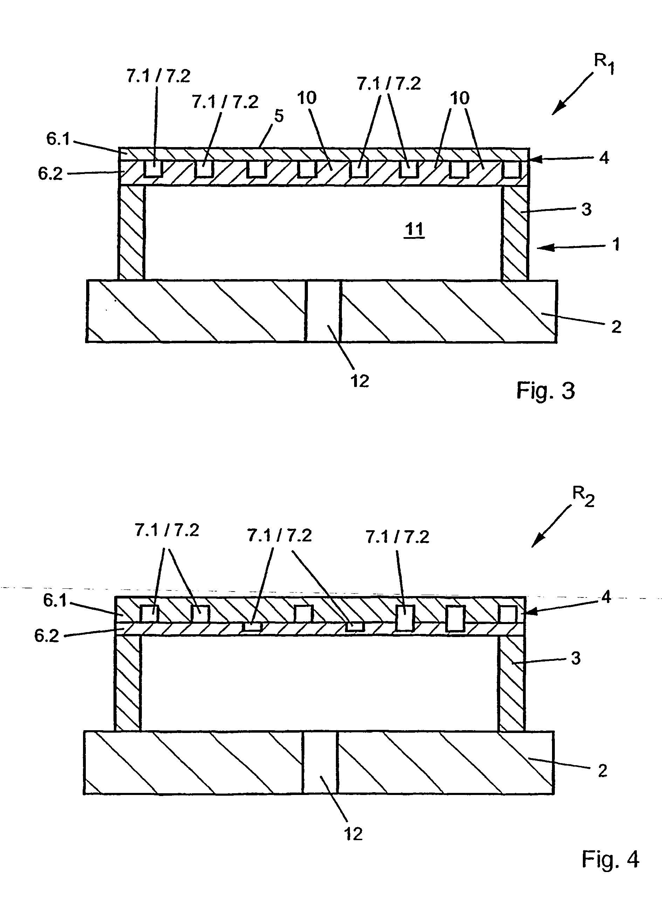

Wie insbesondere aus der querschnittlichen Darstellung gemäss Figur 3 hervorgeht, besteht das Spiegelelement 4 aus zumindest einer Membran 6.1, 6.2, wobei die Membran 6.1 die o.g. Oberfläche 5 bildet.

Bevorzugt ist das Spiegelelement 4 zweiteilig als Membran 6.1, 6.2 ausgebildet, wobei im bevorzugten Ausführungsbeispiel dem Spiegelelement 4, insbesondere der Membran 6.2 eine Mehrzahl von Kühlkanälen 7.1, 7.2 zugeordnet sind.

Wie insbesondere in Figur 1 gestrichelt angedeutet ist, werden die Kühlkanäle 7.1, 7.2 über einen Zulauf 8 und einen Ablauf 9 gespeist, wobei Zulauf 8 und Ablauf 9 die Grundplatte 2 durchgreifen und über die Zylinderwand 3 in das Spiegelelement 4, insbesondere in dessen Kühlkanäle 7.1, 7.2 einmünden. Vorzugsweise liegen Zulauf 8 und Ablauf 9 auf einer Längsachse L der Membran 6.2 und sind vorzugweise stirnseitig angeordnet.

Im bevorzugten Ausführungsbeispiel gemäss Figur 2 ist das Spiegelelement 4, insbesondere die Membran 6.1, 6.2 oval ausgebildet, wobei eine Längsachse L grösser ist als eine Querachse Q.

Eine weitere Besonderheit der vorliegenden Erfindung ist, dass die einzelnen Kühlkanäle 7.1 zueinander parallel verlaufen und beabstandet zueinander angeordnet sind und einen Winkel α von etwa 30° bis 60°, vorzugsweise von 45° einschliessen.

Die Kühlkanäle 7.2 verlaufen vorzugsweise rechtwinklig und im gleichen Abstand ebenfalls parallel zu den Kühlkanälen 7.1 und schliessen einen Winkel β von etwa -30° bis -60°, vorzugsweise -45° zur Querachse Q ein.

Hierdurch entstehen zwischen den jeweiligen Kühlkanälen 7.1, 7.2 rechteckartige Stegelemente 10, welche die jeweiligen Membrane 6.1, 6.2 beabstanden.

Damit das Spiegelelement 4, insbesondere die Membrane 6.1, 6.2 sich homogen über die vollständige Oberfläche kontinuierlich deformieren lassen, sind die Membran 6.1 und 6.2 fest, insbesondere formschlüssig miteinander verbunden.

Wie ferner aus Figur 3 hervorgeht, ist zwischen dem Spiegelelement 4, der Zylinderwand 3 und der Grundplatte 2 ein Innenraum 11 gebildet, der zur Aufnahme hier nicht dargestellter Aktuatoren od. dgl. dient. Im bevorzugten Ausführungsbeispiel ist in der Grundplatte 2 eine Öffnung 12 gebildet, in welche beispielsweise ein kompressives oder vorzugsweise ein inkompressives Medium, wie beispielsweise Wasser oder Öl eingefüllt wird und mittels Druck oder Unterdruckbeaufschlagung des Spiegelelement 4 deformiert wird, wobei bei Druckbeaufschlagung auf das Spiegelelement, insbesondere die Membran 6.1, 6.2 nach aussen gewölbt und bei Unterdruck nach innen gewölbt wird. Hierdurch lässt sich beispielsweise eine Fokussierlage eines Lasers, welcher auf die Oberfläche 5 des Spiegelelementes 4 auftifft, beeinflusst.

In einem weiteren Ausführungsbeispiel gemäss Figur 4 ist dargestellt, dass die einzelnen Kühlkanäle 7.1, 7.2 entweder in der Membran 6.1 und/oder in der Membran 6.2 vorgesehen sein können. Diese können auch in beiden Membranen 6.1, 6.2 überlappend vorgesehen sein, wobei diese querschnittlich rechteckartig, gewölbt, halbkreisartig und bei Überlappung rund ausgebildet sein können. Hier sei der Erfindung keine Grenze gesetzt.

Ferner soll auch im Rahmen der vorliegenden Erfindung liegen, in den Innenraum 11, beispielsweise mechanisch, pneumatisch, hydraulisch oder piezoelektrisch betriebene Aktuatoren od. dgl. einzusetzen, um die Membran 6.1, 6.2 bzw. das Spiegelelement 4 zu deformieren.

Wesentlich ist jedoch, dass unmittelbar eine Spiegeloberfläche 5, insbesondere die Membran 6.1 sehr gut gekühlt wird, um insbesondere die Standzeit durch diese direkte Kühlung der Oberfläche unabhängig von beliebiegen Aktuatoren zur Deformierung des Spiegelelementes zu kühlen.

Dabei soll auch im Rahmen der vorliegenden Erfindung liegen, dass die Kühlkanäle in Längsrichtung und/oder in Querrichtung oder in beliebigen Winkeln α und β in den Membranen 7.1, 7.2 angeordnet sein können. Hierauf sei die vorliegende Erfindung nicht beschränkt.

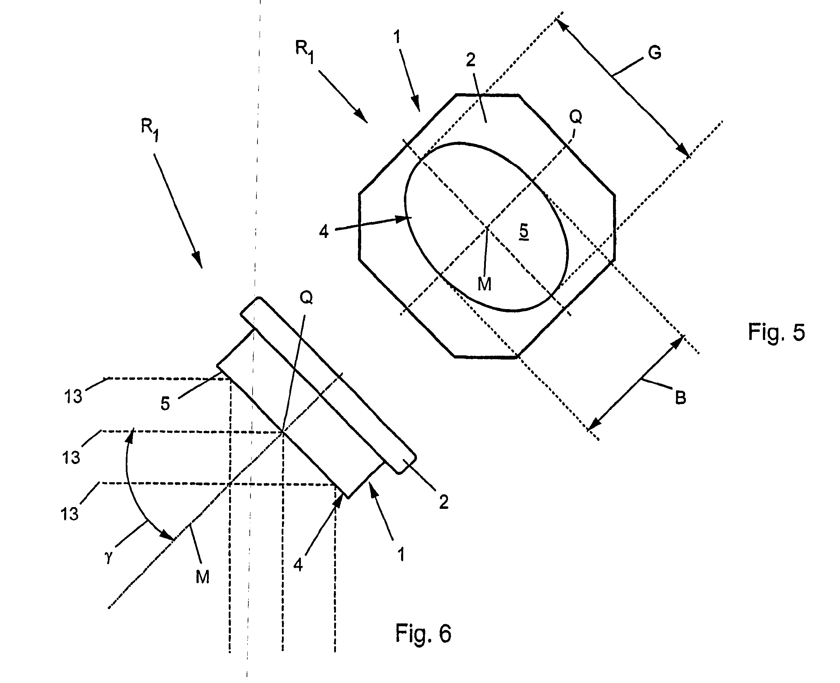

Gemäss Figur 5 ist als Draufsicht der Spiegel R₁ aufgezeigt, bei welchem das Spiegeleelement 4 erfindungsgemäss oval ausgebildet ist. Dabei ist das Spiegelelement 4 von einer Gesamtlänge G, die wesentlich grösser ist als eine Breite B.

Wichtig bei der vorliegenden Erfindung ist auch, insbesondere wenn der Spiegel R₁ als adaptiver Spiegel ausgebildet ist, dass dessen Oberfläche 5 in oben beschriebener Weise verformbar ist. Durch die Verformung der ovalen Oberfläche lassen sich unterschiedliche Wellenfronten, die sich in Form von Laserlicht in einem Einfalls- und/oder Ausfallswinkel γ, bezogen auf eine Flächennormale, bspw. auf eine Mittelachse M des Spiegelelementes 4 auf dessen Oberfläche 5 umlenken bzw. reflektieren lassen, beeinflussen.

Insbesondere über die Verformung der ovalen Spiegelfläche wird der Laserstrahl, welcher auf eine Oberfläche 5 tifft, unterschiedlich divergiert, wobei seine Divergenz gleichzeitig durch die Wölbung beinflussbar ist. Insbesondere im Bereich des Mittelpunktes M wird ein ovaler Spiegel im wesentlichen homogen und gleichmässig gewölbt.

Dabei hat sich insbesondere als Verhältnis zwichen einer Gesamtlänge G zur Breite B des Spiegelelementes 4 in Abhängigkeit des Einfallwinkels γ zu einer Mittelachse M bzw. der Flächennormalen erwiesen, dass die Gesamtlänge G der Breite B dividiert durch (cos²γ) entspricht (G = B/ (cos² γ).

Ändert sich beispielsweise der Ein- und/oder Ausfallswinkel γ zur lotrechten Mittelachse M zur Oberfläche des Spiegeleelementes 4, so lässt sich über diese Funktion G = B/(cos²γ) das entsprechende Verhältnis der Breite B bzw. Gesamtlänge G bestimmen. Der Einfallswinkel γ wird für jedes Spiegeleelement fest vorgegeben und die Gesamtlänge G bzw. die Breite B wird hierfür jeweils bestimmt bzw. ausgelegt. Wie insbesondere in Figur 6 dargestellt ist, sind einzelne Lichtwellen 13 aufgezeigt, die einerseits mittig auf die Mittelachse M treffen und ausserhalb von dieser auf die Oberfläche 5 auftreffen und von dieser reflektiert werden. Dabei ist der Einfalls- und/oder Ausfallswinkel γ, bezogen auf eine lotrechte Mittelachse M zur Oberfläche 5 hin im bevorzugten Ausführungsbeispiel 45° gewählt.

Ändert sich beispielsweise dieser Winkel γ, wird dieser grösser oder geringer gewählt, so ergeben sich Unterschiede in der Wellenfront des einfallenden sowie des ausfallenden Laserlichtes.

Um eine entsprechende Wölbung und Form des Spiegelelementes optimal im Verhältnis zum Winkel γ zu wählen, wird die ovale Form des Spiegelelementes 4 in der oben beschriebenen Weise verwendet, wobei die Breite B im oben beschriebenen Verhältnis zur Gesamtlänge G in Abhängigkeit des Winkels γ steht. Hierdurch lässt sich für jeden beliebigen Winkel γ ein optimaler Spiegel R auslegen, der auf diese festgelegt bzw. vorgegebenen Winkel γ anpassbar ist. Hierdurch lässt sich die Qualtität der Wellenfront beibehalten. Lediglich die Divagenz der Wellenfront lässt sich beeinflussen.

**Positionszahlenliste**

| | | | | | |
|---|---|---|---|---|---|
| 1 | Gehäuse | 34 | | 67 | |
| 2 | Grundplatte | 35 | | 68 | |
| 3 | Zylinderwand | 36 | | 69 | |
| 4 | Spiegelelement | 37 | | 70 | |
| 5 | Oberfläche | 38 | | 71 | |
| 6 | Membran | 39 | | 72 | |
| 7 | Kühlkanal | 40 | | 73 | |
| 8 | Zulauf | 41 | | 74 | |
| 9 | Ablauf | 42 | | 75 | |
| 10 | Stegelement | 43 | | 76 | |
| 11 | Innenraum | 44 | | 77 | |
| 12 | Öffnung | 45 | | 78 | |
| 13 | Lichtwelle | 46 | | 79 | |
| 14 | | 47 | | | |
| 15 | | 48 | | R₁ | Spiegel |
| 16 | | 49 | | R₂ | Spiegel |
| 17 | | 50 | | | |
| 18 | | 51 | | L | Längsachse |
| 19 | | 52 | | Q | Querachse |
| 20 | | 53 | | | |
| 21 | | 54 | | α | Winkel |
| 22 | | 55 | | β | Winkel |
| 23 | | 56 | | | |
| 24 | | 57 | | M | Mittelachse |
| 25 | | 58 | | | |
| 26 | | 59 | | G | Gesamtlänge |
| 27 | | 60 | | | |
| 28 | | 61 | | B | Breite |
| 29 | | 62 | | α | Winkel |
| 30 | | 63 | | β | Winkel |
| 31 | | 64 | | γ | Winkel |
| 32 | | 65 | | | |
| 33 | | 66 | | | |

## Patentansprüche

1. Adaptiver Spiegel als Laser-Strahlführungskomponente mit einem Gehäuse (1), welchem ein Spiegelelement (4) zugeordnet ist, wobei das Spiegelelement (4) eine elliptische Membran (6.1, 6.2) umfasst welche durch Krafteinwirkung auf die von der optischen Fläche des Spiegelelementes abgewandten inneren Seite der Membran deformierbar ist und wobei das Spiegelelement (4) elliptisch ausgebildet ist, also die Breite (B) des Spiegelelementes (4) geringer ist als die Gesamtlänge (G) des Spiegelelementes (4),
**dadurch gekennzeichnet,**
**dass** die Membran (6.1, 6.2) zweilagig ausgebildet ist, wobei innerhalb dieser zweilagigen Membran (6.1, 6.2) des Spiegelelementes (4) eine Mehrzahl von Kühlkanälen (7.1, 7.2) angeordnet ist und eine erste Anordnung von Kühlkanälen (7.1) parallel und beabstandet zueinander verläuft, wobei eine zweite Anordnung von Kühlkanälen (7.2) hierzu, vorzugsweise rechtwinklig und parallel beabstandet verläuft, so dass dazwischen jeweils karo- oder rautenarttge Stegelemente (10) gebildet sind, wobei die einen Kühlkanäle (7.1) einen Winkel (α) zu einer Querachse (Q) in Richtung der Breite (B) des Spiegelelementes (4) von etwa 30° bis 60°, insbesondere von 45° einschliessen und dass die rechtwinklig dazu verlaufenden zweiten Kühlkanäle (7.2) einen Winkel (β) von etwa -30° bis -60°, insbesondere von -45° zur Querachse (Q) des Spiegelelementes (4) einschliessen.

2. Adaptiver Spiegel nach Anspruch 1 oder 2, **dadurch gekennzeichnet, dass** die Kühlkanäle (7.1, 7.2) mit zumindest einem Zulauf (8) und wenigstens einem Ablauf (9) in Verbindung stehen.

3. Adaptiver Spiegel nach wenigstens einem der Ansprüche 1 bis 6, **dadurch gekennzeichnet, dass** die Kühlkanäle (7.1, 7.2) in der äusseren und/oder inneren Membran (6.1, 6.2) des Spiegelelementes (4) vorgesehen sind.

4. Adaptiver Spiegel nach wenigstens einem der Ansprüche 1 bis 7, **dadurch gekennzeichnet, dass** die Stegelemente (10) zu einer Längsachse (L) und/oder zu einer Querachse (Q) des Spiegelelementes (4) diagonal verlaufen.

5. Adaptiver Spiegel nach wenigstens einem der Ansprüche 1 bis 8, **dadurch gekennzeichnet, dass** der Zulauf (8) sowie der Ablauf (9) für die Kühlkanäle (7.1, 7.2) jeweils endseits und gegenüberliegend im Spiegelelement (4) vorgesehen sind.

6. Adaptiver Spiegel nach Anspruch 8 oder 9, **dadurch** gekennzeichent, dass Zulauf (8) und Ablauf (9) in jeweils stirnseitigen Bereichen des Spiegelelementes (4) im Bereich der Längsachse (L) vorgesehen sind.

7. Adaptiver Spiegel nach wenigstens einem der Ansprüche 1 bis 10, **dadurch gekennzeichnet, dass** die zumindest eine Membran (6.1, 6.2) mechanisch, pneumatisch, hydraulisch, piezoelektrisch zur verformbar ist.

8. Adaptiver Spiegel nach wenigstens einem der Ansprüche 1 bis 11, **dadurch gekennzeichnet, dass** an die zumindest eine Membran (6.1, 6.2) eine umlaufende Zylinderwand (3) anschliesst, welche mit einer Grundplatte (2) verbunden ist, wobei zwischen Zylinderwand (3), Grundplatte (2) und Membran (6.1, 6.2) ein Innenraum (11) gebildet ist.

9. Adaptiver Spiegel nach Anspruch 12, **dadurch gekennzeichnet, dass** Ablauf (9) und Zulauf (8) durch die Grundplatte (2) sowie durch die Zylinderwand (3) verlaufen und an die Kühlkanäle (7.1, 7.2) anschliessen.

10. Adaptiver Spiegel nach Anspruch 12 oder 13, **dadurch gekennzeichnet, dass** der Innenraum (11), insbesondere das Spiegelelement (4) pneumatisch, hydraulisch oder piezoelektrisch verformbar. ist, wobei eine Kühlung von der Deformierung entkoppelt ist.

11. Adaptiver Spiegel nach wenigstens einem der Ansprüche 1 bis 14, **dadurch gekennzeichnet, dass** die Kühlkanäle (7.1, 7.2) querschnittlich rechteckartig, oval, rund oder teilkreisabschnittartig ausgebildet sind.

12. Adaptiver Spiegel nach wenigstens einem der Ansprüche 1 bis 15, **dadurch gekennzeichnet, dass** das spiegelelement (4) unabhängig verformbar und unabhängig separat kühlbar ist.

## Claims

1. Adaptive mirror as a laser beam guiding component having a housing (1), with which a mirror element (4) is associated, wherein the mirror element (4) comprises an elliptical diaphragm (6.1, 6.2), which is deformable by the action of force upon the inner side of the diaphragm remote from the optical surface of the mirror element, and wherein the mirror element (4) is of an elliptical design, i.e. the width (B) of the mirror element (4) is smaller than the total length (G) of the mirror element (4),
**characterized in**
**that** the diaphragm (6.1, 6.2) is of a two-layered design, wherein inside said two-layered diaphragm (6.1, 6.2) of the mirror element (4) a plurality of cooling channels (7.1, 7.2) are disposed and a first arrangement of cooling channels (7.1) extend parallel and spaced-apart relative to one another, wherein a second arrangement of cooling channels (7.2) extend preferably at right angles thereto and parallel and spaced-apart, so that between them in each case square- or diamond-like web elements (10) are formed, wherein the one cooling channels (7.1) with a transverse axis (Q) in the direction of the width (B) of the mirror element (4) include an angle (α) of approximately 30° to 60°, in particular of 45°, and that the second cooling channels (7.2) extending at right angles thereto with the transverse axis (Q) of the mirror element (4) include an angle (β) of approximately -30° to -60°, in particular of -45°.

2. Adaptive mirror according to claim 1 or 2, **characterized in that** the cooling channels (7.1, 7.2) communicate with at least one inlet (8) and at least one outlet (9).

3. Adaptive mirror according to at least one of claims 1 to 6, **characterized in that** the cooling channels (7.1, 7.2) are provided in the outer and/or inner diaphragm (6.1, 6.2) of the mirror element (4).

4. Adaptive mirror according to at least one of claims 1 to 7, **characterized in that** the web elements (10) extend diagonally relative to a longitudinal axis (L) and/or relative to a transverse axis (Q) of the mirror element (4).

5. Adaptive mirror according to at least one of claims 1 to 8, **characterized in that** the inlet (8) and the outlet (9) for the cooling channels (7.1, 7.2) are provided each at opposite ends to one another in the mirror element (4).

6. Adaptive mirror according to claim 8 or 9, **characterized in that** inlet (8) and outlet (9) are provided in each case in end regions of the mirror element (4) in the region of the longitudinal axis (L).

7. Adaptive mirror according to at least one of claims 1 to 10, **characterized in that** the at least one diaphragm (6.1, 6.2) is mechanically, pneumatically, hydraulically, piezoelectrically deformable.

8. Adaptive mirror according to at least one of claims 1 to 11, **characterized in that** adjoining the at least one diaphragm (6.1, 6.2) is a circumferential cylinder wall (3), which is connected to a base plate (2), wherein between cylinder wall (3), base plate (2) and diaphragm (6.1, 6.2) an inner space (11) is formed.

9. Adaptive mirror according to claim 12, **characterized in that** outlet (9) and inlet (8) extend through the base plate (2) as well as through the cylinder wall (3) and connect to the cooling channels (7.1, 7.2).

10. Adaptive mirror according to claim 12 or 13, **characterized in that** the inner space (11), in particular the mirror element (4) is pneumatically, hydraulically or piezoelectrically deformable, wherein cooling is decoupled from the deformation.

11. Adaptive mirror according to at least one of claims 1 to 14, **characterized in that** the cooling channels (7.1, 7.2) are designed with a cross section that is like a rectangle, oval, round or like a portion of a graduated circle.

12. Adaptive mirror according to at least one of claims 1 to 15, **characterized in that** the mirror element (4) is independently deformable and independently separately coolable.

## Revendications

1. Miroir adaptatif comme élément de guidage de faisceau laser, avec un boîtier (1) auquel est associé un élément de miroir (4), l'élément de miroir (4) comportant une membrane elliptique (6.1, 6.2) qui est déformable sous l'action d'une force sur le côté intérieur de la membrane éloignée de la face optique de l'élément de miroir et l'élément de miroir (4) étant réalisé elliptique, donc la largeur (B) de l'élément de miroir (4) étant plus petite que la longueur totale (G) de l'élément de miroir (4),
**caractérisé par le fait que**
la membrane (6.1, 6.2) est réalisée en deux couches, à l'intérieur de cette membrane en deux couches (6.1, 6.2) de l'élément de miroir (4) étant disposés une pluralité de canaux de refroidissement (7.1, 7.2) et un premier aménagement de canaux de refroidissement (7.1) s'étendant parallèles et distants l'un de l'autre, un deuxième aménagement de canaux de refroidissement (7.2) s'étendant parallèles et distants l'un de l'autre, de préférence à angle droit par rapport au premier, de sorte qu'entre chacun d'eux étant formés des éléments d'entretoise (10) en forme de carreau, les uns canaux de refroidissement (7.1) formant, avec un axe transversal (Q) dans la direction de la largeur (B) de l'élément de miroir (4), un angle (α) d'environ 30° à 60°, en particulier de 45° et que les deuxièmes canaux de refroidissement (7.2), s'étendant à angle droit par rapport à ces derniers, forment, avec l'axe transversal (Q) de l'élément de miroir (4), un angle (β) d'environ -30° à -60°, en particulier de -45°.

2. Miroir adaptatif selon la revendication 1 ou 2, **caractérisé par le fait que** les canaux de refroidissement (7.1, 7.2) communiquent avec au moins un conduit d'amenée (8) et au moins un conduit d'évacuation (9).

3. Miroir adaptatif selon au moins l'une des revendications 1 à 2, **caractérisé par le fait que** les canaux de refroidissement (7.1 à 7.2) sont prévus dans la membrane extérieure et/ou intérieur (6.1, 6.2) de l'élément de miroir (4).

4. Miroir adaptatif selon au moins l'une des revendications 1 à 3, **caractérisé par le fait que** les éléments d'entretoise (10) s'étendent diagonalement par rapport à un axe longitudinal (L) et/ou à un axe transversal (Q) de l'élément de miroir (4).

5. Miroir adaptatif selon au moins l'une des revendications 1 à 4, **caractérisé par le fait que** le conduit d'amenée (8) ainsi que le conduit d'évacuation (9) des canaux de refroidissement (7.1, 7.2) sont prévus, chacun, du côté de l'extrémité et opposés l'un à l'autre dans l'élément de miroir (4).

6. Miroir adaptatif selon la revendication 4 ou 5, **caractérisé par le fait que** le conduit d'amenée (8) et le conduit d'évacuation (9) sont prévus, chacun, dans des côtés frontaux de l'élément de miroir (4), à l'endroit de l'axe longitudinal (L).

7. Miroir adaptatif selon au moins l'une des revendications 1 à 6, **caractérisé par le fait que** l'au moins une membrane (6.1, 6.2) est déformable mécaniquement, pneumatiquement, hydrauliquement, piézoélectriquement.

8. Miroir adaptatif selon au moins l'une des revendications 1 à 7, **caractérisé par le fait qu'**à l'au moins une membrane (6.1, 6.2) se raccorde une paroi cylindrique périphérique (3) qui est assemblée avec une plaque de base (2), entre la paroi cylindrique (3), la plaque de base (2) et la membrane (6.1, 6.2) étant formé un espace intérieur (11).

9. Miroir adaptatif selon la revendication 8, **caractérisé par le fait que** le conduit d'évacuation (9) et le conduit d'amenée (8) s'étendent à travers la plaque de base (2) ainsi qu'à travers la paroi cylindrique (3) et viennent se raccorder aux canaux de refroidissement (7.1, 7.2).

10. Miroir adaptatif selon la revendication 8 ou 9, **caractérisé par le fait que** l'espace intérieur (11), en particulier l'élément de miroir (4), est déformable pneumatiquement, hydrauliquement ou piézoélectriquement, un refroidissement étant découplé de la déformation.

11. Miroir adaptatif selon au moins l'une des revendications 1 à 10, **caractérisé par le fait que** les canaux de refroidissement (7.1, 7.2) sont réalisés de section rectangulaire, ovale, ronde ou en forme de segment de cercle partiel.

12. Miroir adaptatif selon au moins l'une des revendications 1 à 11, **caractérisé par le fait que** l'élément de miroir (4) est déformable indépendamment et peut être refroidi indépendamment.
